# FASCICULE DE BREVET EUROPEEN

(11) **EP 3 019 364 B1**
(45) Date de publication et mention de la délivrance du brevet: **23.10.2019**
(21) Numéro de dépôt: 14739701.2
(22) Date de dépôt: 23.06.2014
(51) Int. Cl.: B60H 1/00

(54) **SYSTÈME DE CONDITIONNEMENT THERMIQUE POUR VÉHICULE AUTOMOBILE, INSTALLATION DE CHAUFFAGE, VENTILATION ET/OU CLIMATISATION CORRESPONDANTE ET PROCÉDÉ DE PILOTAGE CORRESPONDANT**
TEMPERATURSTEUERUNGSSYSTEM FÜR EIN KRAFTFAHRZEUG, ENTSPRECHENDE HEIZ-, BELÜFTUNGS- UND/ODER KLIMAANLAGE SOWIE ENTSPRECHENDES STEUERUNGSVERFAHREN
TEMPERATURE CONTROL SYSTEM FOR A MOTOR VEHICLE, CORRESPONDING HEATING, VENTILATION AND/OR AIR-CONDITIONING EQUIPMENT, AND CORRESPONDING CONTROL METHOD

(30) Priorité: 08.07.2013 FR 1356714
(43) Date de publication de la demande: 18.05.2016
(73) Titulaire: Valeo Systèmes Thermiques, 78321 Le Mesnil St Denis Cedex (FR)
(72) Inventeur: GOUR, Josselin, F-75015 Paris (FR); AOUN, Bernard, F-75014 Paris (FR)
(74) Mandataire: Metz, Gaëlle
(86) Numéro de dépôt international: PCT/EP2014/063197
(87) Numéro de publication internationale: WO 2015/003894

(56) Documents cités:
- EP-A2- 1 348 920
- CH-A1- 703 290
- DE-A1- 19 644 583
- US-A1- 2004 011 070

## Description

L'invention est du domaine des installations de chauffage, de ventilation et/ou de climatisation d'un véhicule automobile électrique ou hybride. L'invention a pour objet un système de conditionnement thermique d'un flux d'air coopérant avec une telle installation. L'invention a aussi pour objet un procédé de pilotage d'un tel système de conditionnement thermique d'un flux d'air. Un système de conditionnement thermique d'un flux d'air est divulgué par US 2004/0011070 A1.

Un véhicule automobile électrique ou hybride, dont la propulsion est assurée au moins partiellement par un moteur électrique, est couramment équipé d'une installation de ventilation, de chauffage et/ou de climatisation pour modifier l'air contenu à l'intérieur de l'habitacle du véhicule en délivrant un flux d'air conditionné à l'intérieur de l'habitacle.

Une telle installation comprend généralement un système de conditionnement d'air.

En particulier, l'invention peut concerner une architecture réversible du système de conditionnement apte à être utilisée en mode pompe à chaleur pour répondre à un besoin de chauffage de l'habitacle, ou en mode de climatisation pour rafraîchir l'air à destination de l'habitacle. Bien sûr, le système de conditionnement d'air peut aussi être piloté en un mode déshumidification permettant d'assécher l'air à destination de l'habitacle.

Selon une architecture connue, le système de conditionnement d'air comprend une boucle de climatisation à l'intérieur de laquelle circule un fluide réfrigérant appelée circuit de fluide réfrigérant, et une boucle secondaire dans laquelle un deuxième fluide, dit fluide caloporteur. Avec une telle architecture, le flux d'air à destination de l'habitacle est réchauffé par le fluide caloporteur circulant dans le circuit de fluide caloporteur. On parle dans ce cas de système indirect.

De façon traditionnelle, la boucle de climatisation ou circuit de fluide réfrigérant comprend un compresseur pour comprimer le fluide réfrigérant, un premier échangeur thermique agencé en face avant tel qu'un évaporateur externe, un deuxième échangeur thermique agencé pour conditionner le flux d'air à destination de l'habitacle tel qu'un évaporateur interne.

Le compresseur est apte à porter le fluide réfrigérant à une haute pression.

Le premier échangeur thermique permet un transfert thermique entre le fluide réfrigérant et l'air ambiant, tel qu'un flux d'air extérieur au véhicule.

Le deuxième échangeur thermique permet un échange thermique entre le fluide réfrigérant et le flux d'air destiné à être délivré à l'intérieur de l'habitacle qui traverse l'échangeur thermique.

En outre, le circuit de fluide réfrigérant et le circuit de fluide caloporteur comprennent conjointement un échangeur thermique bi-fluide, par exemple un condenseur dans lequel le fluide réfrigérant cède de la chaleur au fluide caloporteur.

Lorsque le système est piloté en mode de climatisation, le fluide réfrigérant condensé s'évapore ensuite dans l'évaporateur interne en absorbant les calories du flux d'air à destination de l'habitacle.

Afin d'améliorer les performances en mode de climatisation, on peut prévoir un sous-refroidissement du fluide réfrigérant avant son passage dans l'évaporateur interne. Pour cela, le système de conditionnement d'air peut comporter un échangeur de sous-refroidissement agencé en face avant du véhicule pour un échange de chaleur entre le fluide réfrigérant et un flux d'air extérieur. Un tel échangeur de sous-refroidissement est aussi appelé condenseur extérieur.

Toutefois, avec une telle architecture, lorsque le système de conditionnement d'air est piloté en mode pompe à chaleur, le fluide réfrigérant condensé est d'abord sous-refroidi avant de traverser l'évaporateur externe dans lequel il absorbe de nouveau les calories du flux d'air extérieur puis de retourner dans le condenseur ou échangeur thermique bi-fluide dans lequel le fluide réfrigérant cède les calories récupérées de l'extérieur au fluide caloporteur.

Lors du sous-refroidissement, le fluide réfrigérant cède donc des calories au flux d'air extérieur au sein de l'échangeur de sous-refroidissement, ce qui dégrade les performances du système de conditionnement d'air en mode de pompe à chaleur.

Un but de la présente invention est de proposer un système de conditionnement permettant un apport d'énergie suffisant en mode pompe à chaleur et des performances améliorées bénéficiant d'un sous-refroidissement du fluide réfrigérant condensé en mode de climatisation.

À cet effet, l'invention a pour objet un système de conditionnement thermique d'un flux d'air pour véhicule automobile selon la revendication 1.

La branche de contournement permet de contourner l'échangeur de sous-refroidissement en mode pompe à chaleur tout en bénéficiant du sous-refroidissement en mode de climatisation, ce qui permet d'améliorer les performances en mode de climatisation sans dégrader les performances en mode de pompe à chaleur.

En effet, en mode de pompe à chaleur, il n'y a plus de pertes d'énergie avec l'air extérieur au sein de l'échangeur de sous-refroidissement, toute l'énergie du fluide réfrigérant en sortie du condenseur est restituée notamment au niveau d'un évaporateur externe en face avant.

Le système de conditionnement peut en outre comporter une ou plusieurs caractéristiques suivantes, prises séparément ou en combinaison :
- le circuit de fluide réfrigérant comprend une vanne de commande agencée en amont de l'échangeur de sous-refroidissement pour autoriser ou interdire la circulation du fluide réfrigérant dans l'échangeur de sous-refroidissement ;
- le circuit de fluide réfrigérant comprend au moins une vanne de commande agencée en amont d'au moins un des premier et deuxième évaporateurs dans un sens de circulation du fluide réfrigérant et apte à autoriser ou interdire la circulation du fluide réfrigérant dans au moins un des premier et deuxième évaporateurs ;
- le circuit de fluide réfrigérant comprend : un premier organe de détente agencé en amont du premier évaporateur selon un sens de circulation du fluide réfrigérant et un deuxième organe de détente agencé en amont du deuxième échangeur thermique selon le sens de circulation du fluide réfrigérant ;
- au moins organe de détente comprend une vanne de commande intégrée apte à autoriser ou interdire la circulation du fluide réfrigérant au sein de l'évaporateur associé ;
- le circuit de fluide réfrigérant comprend une vanne trois-voies avec une voie d'entrée, une première voie de sortie raccordée au premier évaporateur et une deuxième voie de sortie raccordée au deuxième évaporateur ;
- le circuit de fluide réfrigérant comprend un point de raccordement raccordé d'une part à la branche de contournement de façon à diriger le fluide réfrigérant en sortie de l'échangeur bi-fluide vers le premier évaporateur et/ou vers le deuxième évaporateur et raccordé d'autre part à l'échangeur de sous-refroidissement ;
- le point de raccordement raccordé d'une part à la branche de contournement et d'autre part à l'échangeur de sous-refroidissement est agencé en amont de l'échangeur de sous-refroidissement selon un sens de circulation du fluide réfrigérant. La branche de contournement peut être réalisée en déplaçant simplement la jonction ou point de raccordement entre l'échangeur de sous-refroidissement et l'évaporateur externe an amont de l'échangeur de sous-refroidissement selon le sens de circulation du fluide réfrigérant et non plus en aval de l'échangeur de sous-refroidissement comme dans certaines architectures de l'art antérieur ;
- le circuit de fluide réfrigérant comprend un compresseur et un point de raccordement agencé en amont du compresseur selon un sens de circulation du fluide réfrigérant et apte à rassembler le fluide réfrigérant en sortie du premier évaporateur et en sortie du deuxième évaporateur pour canaliser le fluide réfrigérant vers le compresseur ;
- ledit système comprend un point de raccordement raccordé à la branche de contournement, à la sortie de l'échangeur de sous-refroidissement et au deuxième évaporateur ;
- le circuit de fluide réfrigérant comprend au moins un clapet anti-retour agencé entre un point de raccordement et l'échangeur de sous-refroidissement ou le premier évaporateur ;
- le circuit de fluide caloporteur comprend un radiateur de chauffage agencé en aval du deuxième échangeur thermique selon un sens d'écoulement du flux d'air à destination de l'habitacle, et en aval du condenseur selon un sens de circulation du fluide caloporteur.

L'invention concerne également une installation de chauffage, ventilation et/ou climatisation comportant un système de conditionnement thermique d'un flux d'air tel que défini précédemment.

L'invention concerne encore un procédé de pilotage d'un système de conditionnement thermique d'un flux d'air tel que défini précédemment.

Selon un mode de réalisation particulier, on interdit la circulation du fluide réfrigérant condensé dans l'échangeur de sous-refroidissement, de sorte que le fluide réfrigérant circule dans la branche de contournement en contournant l'échangeur de sous-refroidissement.

Selon une variante de réalisation, on autorise la circulation du fluide réfrigérant condensé dans l'échangeur de sous-refroidissement, de sorte que le fluide réfrigérant circule en parallèle dans la branche de contournement et dans l'échangeur de sous-refroidissement.

Le procédé peut encore comprendre les étapes suivantes : on commande la circulation d'un fluide caloporteur dans le condenseur pour un échange thermique avec le fluide réfrigérant, puis on commande la circulation du fluide caloporteur dans un radiateur de chauffage agencé pour conditionner le flux d'air à destination de l'habitacle.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente un circuit de conditionnement d'air selon un premier mode de réalisation,
- la figure 2 représente le circuit de la figure 1 fonctionnant dans un mode de climatisation,
- la figure 3 représente le circuit de la figure 1 fonctionnant dans un mode de pompe à chaleur,
- la figure 4 représente le circuit de la figure 1 fonctionnant dans un premier mode de déshumidification,
- la figure 5 représente le circuit de la figure 1 fonctionnant dans un deuxième mode de déshumidification,
- la figure 6 représente un circuit de conditionnement d'air selon un deuxième mode de réalisation,
- la figure 7 représente le circuit de la figure 6 fonctionnant dans un mode de climatisation,
- la figure 8 représente le circuit de la figure 6 fonctionnant dans un mode de pompe à chaleur,
- la figure 9 représente le circuit de la figure 6 fonctionnant dans un mode de recirculation,
- la figure 10 représente le circuit de la figure 6 fonctionnant dans un premier mode de déshumidification,
- la figure 11 représente le circuit de la figure 6 fonctionnant dans un deuxième mode de déshumidification, et
- la figure 12 représente le circuit de la figure 6 fonctionnant dans un troisième mode de déshumidification.

Dans ces figures, les éléments sensiblement identiques portent les mêmes références.

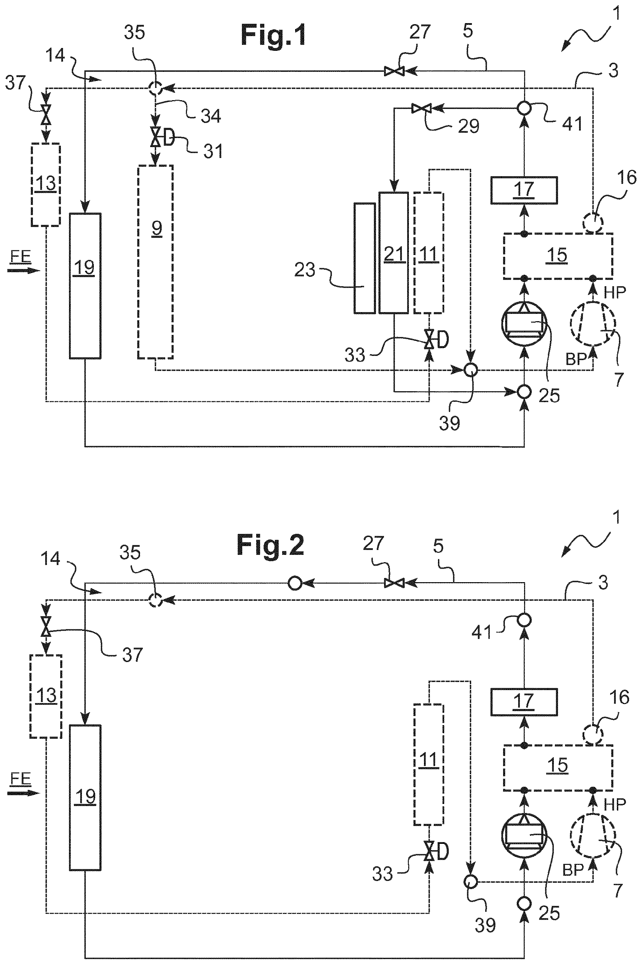

La figure 1 représente de façon schématique et simplifiée un système de conditionnement 1 d'une installation de chauffage, ventilation et/ou climatisation pour véhicule automobile.

Un tel système de conditionnement 1 permet de modifier les paramètres de l'air à l'intérieur de l'habitacle du véhicule en délivrant un flux d'air à l'intérieur de l'habitacle.

À cet effet, le système de conditionnement 1 peut comprendre un pulseur (non représenté) pour faire circuler le flux d'air par exemple depuis une bouche d'admission d'air (non représentée) vers une bouche de délivrance d'air (non représentée) dans l'habitacle. Il peut notamment comprendre une bouche de dégivrage/désembuage destinée à délivrer le flux d'air vers le pare-brise et/ou les vitres avant du véhicule.

Un tel système de conditionnement 1 peut fonctionner selon différents modes, notamment en mode pompe à chaleur pour répondre à un besoin de chauffage de l'habitacle, ou un mode climatisation permettant de conditionner le flux d'air à destination de l'habitacle du véhicule pour le rafraîchir, ou encore un mode déshumidification pour obtenir un flux d'air sec avant de le distribuer dans l'habitacle, ou encore recirculation du flux d'air de l'habitacle tels que décrits par la suite.

### Premier mode de réalisation

Selon le premier mode de réalisation illustré sur la figure 1, le système de conditionnement 1 comporte un circuit de fluide réfrigérant 3, et un circuit de fluide caloporteur 5 tel qu'un mélange d'eau et de glycol. Le circuit de fluide réfrigérant 3 est aussi appelé boucle de climatisation 3.

Les composants du circuit de fluide réfrigérant 3 sont raccordés les uns aux autres par des conduites ou canalisations à travers lesquelles le fluide réfrigérant circule.

Respectivement, les composants du circuit de fluide caloporteur 5 sont raccordés les uns aux autres par des conduites ou canalisations à travers lesquelles le fluide caloporteur circule.

Sur les figures, le circuit du fluide réfrigérant 3 est représenté en pointillés et le circuit du fluide caloporteur 5 est représenté en traits pleins.

Le sens de circulation des fluides est schématisé par des flèches. Bien entendu, le sens de circulation schématisé sur la figure est à titre illustratif et non limitatif.

Selon le mode de réalisation illustré sur la figure 1, le circuit de fluide réfrigérant 3 comprend :
- un compresseur 7,
- un premier échangeur 9 thermique, pour un échange de chaleur entre le fluide réfrigérant et un flux d'air extérieur FE, ici un premier évaporateur 9,
- un deuxième échangeur thermique 11 agencé de manière à conditionner un flux d'air à destination de l'habitacle du véhicule, ici un deuxième évaporateur 11,
- un échangeur de sous-refroidissement 13, également appelé sous-refroidisseur ou « subcooler » en anglais, apte à sous-refroidir le fluide réfrigérant en phase liquide.

Le circuit de fluide réfrigérant 3 comprend également un dispositif de contournement 14 de l'échangeur de sous-refroidissement 13.

Le circuit de fluide réfrigérant 3 comporte en outre un condenseur 15. Selon le mode de réalisation décrit, il s'agit d'un échangeur thermique bi-fluide 15 agencé conjointement sur le circuit de fluide réfrigérant 3 et le circuit de fluide caloporteur 5. On peut prévoir une bouteille de stockage 16 permettant de stocker le fluide réfrigérant liquide en sortie du condenseur 15, de façon à compenser les variations de volume du fluide réfrigérant.

Le circuit de fluide caloporteur 5 peut comporter un échangeur thermique additionnel optionnel 17, par exemple par chauffage par résistance, en série avec l'échangeur thermique bi-fluide 15.

Le circuit de fluide caloporteur 5 comporte en outre un radiateur 19, tel qu'un radiateur de refroidissement 19, agencé en face avant du véhicule.

Le circuit de fluide caloporteur 5 comporte également un troisième échangeur thermique 21 agencé de manière à conditionner le flux d'air à destination de l'habitacle.

On peut aussi prévoir un échangeur thermique additionnel 23, par exemple par résistance électrique à coefficient de température positif CTP, agencé pour réchauffer le flux d'air à destination de l'habitacle, par exemple en complément du radiateur de chauffage 21 ou « heater core » en anglais.

En outre, le circuit de fluide caloporteur 5 peut comporter une pompe 25 pour la circulation du fluide caloporteur.

Le circuit de fluide caloporteur 5 peut aussi comporter une ou plusieurs vannes de commande 27, 29, permettant de diriger le fluide caloporteur selon le mode de fonctionnement du système de conditionnement 1.

En fonctionnement, le compresseur 7 reçoit en entrée le fluide réfrigérant à l'état gazeux, ou un mélange de gaz/liquide, sous basse pression et basse température, tel qu'illustré schématiquement par le sigle « BP » au-dessus des canalisations sur les figures.

Le compresseur 7 comprend donc un orifice d'entrée par lequel le fluide réfrigérant rentre et un orifice de sortie par lequel le fluide réfrigérant comprimé sort.

La compression permet d'élever la pression et la température du fluide réfrigérant, tel qu'illustré schématiquement par le sigle « HP » au-dessus des canalisations sur les figures.

Le premier évaporateur 9 est par exemple agencé à l'intérieur du véhicule au niveau de la face avant du véhicule pour être traversé par un flux d'air FE en provenance de l'extérieur du véhicule. On parle également d'échangeur externe.

En fonctionnement, le fluide réfrigérant s'évapore dans le premier évaporateur 9, et en s'évaporant le fluide réfrigérant absorbe la chaleur du flux d'air FE traversant le premier évaporateur 9.

Un premier organe de détente 31 est par exemple agencé en série avec le premier évaporateur 9. Plus précisément, le premier organe de détente est agencé en série entre l'échangeur thermique bi-fluide 15 et le premier évaporateur 9.

Notamment, le premier organe de détente 31 est agencé en amont du premier évaporateur 9 dans le sens de circulation du fluide réfrigérant en mode pompe à chaleur ou de déshumidification tels que décrits par la suite.

En effet, dans un mode de pompe à chaleur ou au moins un mode de déshumidification du flux d'air à destination de l'habitacle décrit par la suite, le fluide réfrigérant circule en série dans le premier organe de détente 31 puis dans le premier évaporateur 9, de façon à abaisser la pression et la température du fluide réfrigérant avant l'évaporation.

En ce qui concerne le deuxième évaporateur 11, il est généralement qualifié d' « évaporateur interne » du fait qu'il est agencé pour échanger des calories avec le flux d'air devant être distribué à l'intérieur de l'habitacle.

En fonctionnement, le fluide réfrigérant entrant dans le deuxième évaporateur 11 absorbe la chaleur du flux d'air à destination de l'habitacle en s'évaporant ; ce qui a pour effet de refroidir le flux d'air.

Le deuxième évaporateur 11 est généralement agencé de façon à permettre une circulation du fluide réfrigérant en son sein sensiblement parallèle à la circulation du fluide réfrigérant dans le premier évaporateur 9, en terme de circulation de fluide.

De plus, le deuxième évaporateur 11 est agencé en amont du troisième échangeur 21 du circuit de fluide caloporteur 5 dans le sens d'écoulement du flux d'air à destination de l'habitacle du véhicule.

Cet agencement est en particulier intéressant pour déshumidifier le flux d'air à destination de l'habitacle en le refroidissant par passage dans le deuxième évaporateur 11 par exemple avant de chauffer ce flux d'air par passage dans le troisième échangeur thermique 21 du circuit de fluide caloporteur 5.

Par ailleurs, un deuxième organe de détente 33 est agencé en série avec le deuxième évaporateur 11. Plus précisément, le deuxième organe de détente 33 est agencé en série entre l'échangeur de sous-refroidissement 13 et le deuxième évaporateur 11.

L'échangeur de sous-refroidissement 13 est quant à lui agencé à l'avant du véhicule pour être traversé par le flux d'air extérieur FE en série avec le condenseur 15 ou échangeur thermique bi-fluide 15. Le sous-refroidissement du fluide réfrigérant en sortie du condenseur 15 est réalisé par échange thermique avec le flux d'air extérieur FE.

Cet échangeur de sous-refroidissement 13 est aussi appelé condenseur extérieur.

Le dispositif de contournement 14 de l'échangeur de sous refroidissement 13 permet de former une boucle de contournement pour que le fluide réfrigérant ne subisse pas de sous-refroidissement en sortie du condenseur 15.

Un tel dispositif de contournement 14 est donc destiné à permettre ou empêcher une circulation du fluide réfrigérant à l'intérieur de l'échangeur de sous-refroidissement 13. En particulier, dans un mode de pompe à chaleur, le fluide réfrigérant contourne l'échangeur de sous refroidissement 13.

Pour ce faire, le dispositif de contournement 14 comporte une branche de contournement 34 de l'échangeur de sous-refroidissement.

La branche de contournement 34 est agencée en amont de l'échangeur de sous-refroidissement 13 dans cet exemple.

Selon le premier mode de réalisation illustré, la branche de contournement 34 est apte à relier la sortie du condenseur 15 et notamment de la bouteille de stockage 16 au premier évaporateur 9.

À cet effet, le dispositif de contournement 14 peut comporter :
- un premier point de raccordement 35 raccordé d'une part à la branche de contournement 34 de façon à diriger le fluide réfrigérant en sortie de l'échangeur bi-fluide 15 vers le premier évaporateur 9 via la branche de contournement 34 et raccordé d'autre part à l'échangeur de sous-refroidissement 13 ;
- une première vanne de commande 7, telle qu'une vanne marche/arrêt, apte à autoriser ou interdire la circulation du fluide réfrigérant à travers l'échangeur de sous-refroidissement 13, et
- une deuxième vanne de commande, telle qu'une vanne marche/arrêt, apte à autoriser ou interdire la circulation du fluide réfrigérant à travers la branche de contournement 34 et donc à travers le premier évaporateur 9.

La deuxième vanne de commande peut être intégrée au premier organe de détente 31. Dans ce cas, le premier organe de détente 31 peut être un détendeur 31 à vanne marche/arrêt intégrée comme dans le premier mode de réalisation décrit.

Selon une variante non représentée, le premier organe de détente 31 et la deuxième vanne de commande, telle qu'une vanne marche/arrêt, sont agencés en série.

Le circuit de fluide réfrigérant 3 comprend en outre un deuxième point de raccordement 39 qui rassemble le fluide réfrigérant en sortie du premier évaporateur 9 et en sortie du deuxième évaporateur 11 pour le canaliser vers le compresseur 7.

Ceci permet de réaliser une bifurcation pour le fluide réfrigérant vers le premier évaporateur 9 avant d'arriver à l'échangeur de sous-refroidissement 13.

Par ailleurs, le condenseur 15 est apte à recevoir le fluide réfrigérant sous forme de gaz chaud qui cède de la chaleur au fluide caloporteur. Le fluide caloporteur étant par exemple de l'eau, on parle de condenseur à eau ou « water condenser » en anglais.

Selon l'agencement représenté sur la figure 1, le condenseur à eau 15 est agencé en sortie du compresseur 7. En fonctionnement, le condenseur à eau 15 reçoit le fluide réfrigérant sous forme de gaz chaud qui cède de la chaleur au fluide caloporteur. Une bouteille de stockage 16 du fluide réfrigérant peut être prévue en série avec le condenseur à eau 15. La bouteille de stockage 16 permet de stocker le fluide réfrigérant liquide afin de compenser d'éventuelles variations de volume.

Concernant le circuit de fluide caloporteur 5, le troisième échangeur thermique 21 permet de chauffer le flux d'air à destination de l'habitacle, par exemple ayant traversé le deuxième évaporateur 11 dans un mode déshumidification.

Il s'agit par exemple d'un radiateur de chauffage couramment appelé « heater core » en anglais.

De plus, comme dit précédemment, on peut prévoir un échangeur thermique additionnel électrique 17 en série entre le condenseur à eau 15 et le troisième échangeur thermique 21. En particulier, l'échangeur thermique additionnel électrique 17 est agencé en aval du condenseur à eau 15 et en amont du troisième échangeur thermique 21, dans le sens d'écoulement du fluide caloporteur, par exemple en mode pompe à chaleur, ou dans au moins un mode de déshumidification du système de conditionnement d'air 1.

L'échangeur thermique additionnel 23 est par exemple agencé en aval du radiateur de chauffage 21 dans le sens d'écoulement du flux d'air à destination de l'habitacle.

Le circuit de fluide caloporteur 5 comprend également un point de raccordement 41 auquel est raccordée la sortie du condenseur à eau 15 ou de l'échangeur thermique additionnel 17.

Le point de raccordement 41 du circuit de fluide caloporteur 5 est également connecté d'une part à une première vanne de commande 27 en amont du radiateur basse-température 19 dans le sens de circulation du fluide caloporteur dans un mode climatisation et d'autre part à une deuxième vanne de commande 29 en amont du radiateur de chauffage 21.

La première vanne de commande 27 est par exemple une vanne deux voies.

La deuxième vanne de commande 29 peut à titre d'exemple être une vanne deux voies ou une vanne trois-voies.

Ainsi, en circulant vers le point de raccordement 41, le fluide caloporteur peut circuler par la suite vers le radiateur de refroidissement 19, par exemple en mode climatisation ou vers le radiateur de chauffage 21 par exemple en mode pompe à chaleur ou dans au moins un mode de déshumidification comme cela sera décrit par la suite.

La circulation du fluide caloporteur dans le radiateur de refroidissement 19 ou le radiateur de chauffage 21 est placée sous la dépendance de la première vanne de commande 27 et de la deuxième vanne de commande 29.

On décrit maintenant plus en détail le pilotage du système de conditionnement 1 selon ce premier mode de réalisation selon divers modes de fonctionnement, tels que climatisation, pompe à chaleur, ou déshumidification.

### Mode climatisation

La figure 2 est une vue schématique du système de conditionnement d'air 1 mis en oeuvre selon un mode climatisation correspondant à un besoin en refroidissement de l'habitacle du véhicule.

Selon ce mode de climatisation permettant de conditionner le flux d'air à destination de l'habitacle du véhicule pour le rafraîchir, le fluide réfrigérant en sortie du compresseur 7 est d'abord condensé, puis est sous-refroidi avant de subir une détente en amont du deuxième évaporateur 11. Le flux d'air à destination de l'habitacle traversant le deuxième évaporateur 11 est alors refroidi.

Selon ce mode climatisation, le système de conditionnement d'air 1 est piloté de sorte que le fluide réfrigérant circule du compresseur 7 vers le condenseur à eau 15.

En passant dans le condenseur à eau 15, le fluide réfrigérant à l'état gazeux comprimé à haute pression HP, haute température, cède de la chaleur au fluide caloporteur circulant dans le circuit de fluide caloporteur 5.

Le fluide caloporteur et le fluide réfrigérant quittent respectivement le condenseur à eau 15.

Le fluide réfrigérant ayant cédé de la chaleur au fluide caloporteur dans le condenseur à eau 15 quitte le condenseur à eau 15 et est stocké dans la bouteille de stockage 16.

Le fluide réfrigérant circule ensuite de la bouteille de stockage 16 vers le premier point de raccordement 35 du circuit de fluide réfrigérant 3.

Le fluide réfrigérant est ensuite dirigé vers l'échangeur de sous-refroidissement 13. Pour ce faire, la première vanne de commande 37, par exemple une vanne marche/arrêt 37, est pilotée en position d'autorisation de circulation de fluide réfrigérant dans l'échangeur de sous-refroidissement 13, tandis que la deuxième vanne de commande intégrée ou non à l'organe de détente 31 et agencée en amont du premier évaporateur 9, est pilotée en position d'interdiction de circulation du fluide réfrigérant dans le premier évaporateur 9.

L'échangeur de sous refroidissement 13 reçoit le fluide réfrigérant en sortie du condenseur à eau 15 pour un sous-refroidissement du fluide réfrigérant par échange thermique avec le flux d'air extérieur FE. Ceci permet d'évacuer des calories vers l'extérieur.

Le fluide réfrigérant sous-refroidi après condensation du condenseur à eau 15 est ensuite dirigé vers le deuxième évaporateur 11.

Plus précisément, le fluide réfrigérant sous-refroidi circule en série dans le deuxième organe de détente 33 puis dans le deuxième évaporateur 11. La détente permet d'abaisser la pression et la température du fluide réfrigérant.

Lors du passage dans le deuxième évaporateur 11, le fluide réfrigérant en s'évaporant absorbe la chaleur du flux d'air traversant le deuxième évaporateur 11 à destination de l'habitacle. Le flux d'air à destination de l'habitacle passant dans le deuxième évaporateur 11 est de la sorte refroidi.

En atteignant l'habitacle du véhicule, par exemple sous l'action d'un pulseur (non représenté), le flux d'air refroidi permet de diminuer la température de l'air de l'habitacle.

Le fluide réfrigérant quitte ensuite le deuxième évaporateur 11 et retourne dans le compresseur 7 pour recommencer un cycle réfrigérant.

Entre le deuxième organe de détente 33 et l'entrée du compresseur 7, le fluide réfrigérant est à basse pression et basse température.

En ce qui concerne le fluide caloporteur, ce dernier est par exemple mis en mouvement par la pompe 25.

Le fluide caloporteur traverse le condenseur à eau 15 dans lequel le fluide caloporteur absorbe la chaleur du fluide réfrigérant.

Le fluide caloporteur traverse ensuite le radiateur de refroidissement 19, où il cède des calories au flux d'air extérieur. Il s'agit selon le mode de réalisation décrit d'un radiateur de refroidissement dit « basse température ».

En mode climatisation, le radiateur de refroidissement 19 permet de refroidir le fluide caloporteur provenant du condenseur à eau 15 par échange de chaleur avec le flux d'air extérieur FE.

Le radiateur de refroidissement 19 présente en outre une sortie par laquelle le fluide caloporteur refroidi quitte le radiateur de refroidissement 19 pour être dirigé de nouveau vers le condenseur à eau 15, éventuellement en étant mis en circulation par la pompe 25.

En refroidissant le fluide caloporteur, le radiateur de refroidissement 19 permet ainsi de refroidir le condenseur à eau 15.

### Mode pompe à chaleur

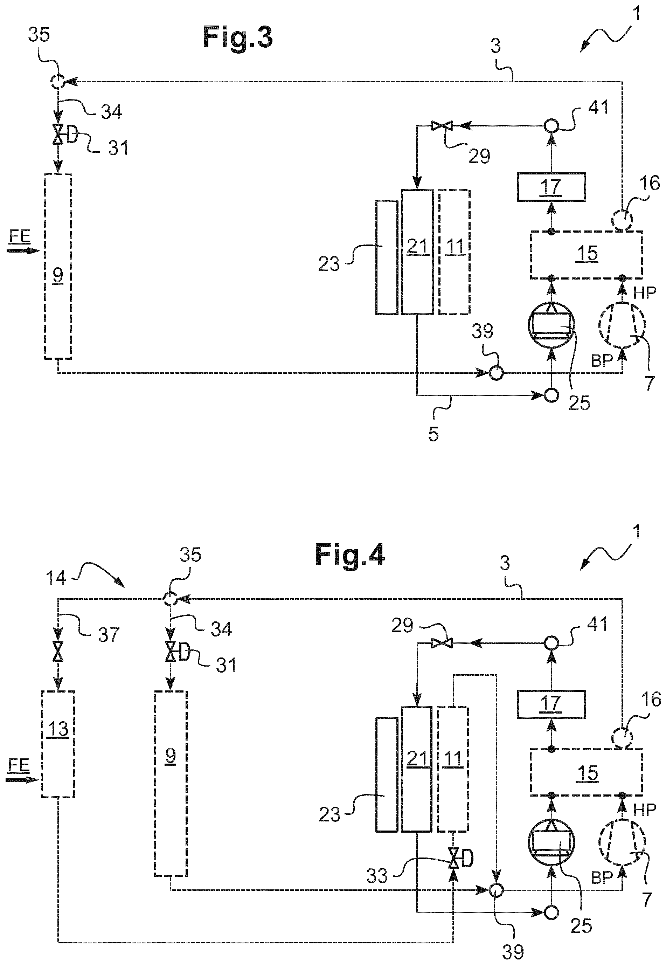

On décrit en référence à la figure 3, un mode de pompe à chaleur, correspondant à un besoin de chauffage de l'habitacle du véhicule.

Selon ce mode de pompe à chaleur, on réalise une évaporation du fluide réfrigérant avec un échange thermique entre le fluide réfrigérant et le flux d'air extérieur FE au sein du premier évaporateur 9. Le fluide réfrigérant absorbe donc des calories du flux d'air extérieur FE avant de les céder au fluide caloporteur dans l'échangeur thermique bi-fluide 15, ici un condenseur à eau 15. Le fluide caloporteur réchauffé cède ensuite de la chaleur au flux d'air à destination de l'habitacle traversant le radiateur de chauffage 21.

Selon ce mode de pompe à chaleur, le système de conditionnement d'air 1 est piloté de sorte que le fluide réfrigérant circule du compresseur 7 vers l'échangeur bi-fluide 15.

En passant dans le condenseur à eau 15, le fluide réfrigérant à l'état gazeux comprimé à haute pression HP, haute température, cède de la chaleur au fluide caloporteur.

Le fluide caloporteur et le fluide réfrigérant quittent respectivement le condenseur à eau 15.

Le fluide réfrigérant ayant cédé de la chaleur au fluide caloporteur dans le condenseur à eau 15 quitte le condenseur à eau 15 et est stocké dans la bouteille de stockage 16.

Le fluide réfrigérant circule ensuite de la bouteille de stockage 16 vers le premier point de raccordement 35 du circuit de fluide réfrigérant 3.

Le fluide réfrigérant est ensuite dirigé vers le premier évaporateur 9. Pour ce faire, la première vanne de commande 37, par exemple une vanne marche/arrêt 37, est pilotée en position d'interdiction de circulation de fluide réfrigérant dans l'échangeur de sous-refroidissement 13, tandis que la deuxième vanne de commande intégrée ou non à l'organe de détente 31 et agencée en amont du premier évaporateur 9, est pilotée en position d'autorisation de circulation du fluide réfrigérant dans le premier évaporateur 9.

Ainsi, l'échangeur de sous refroidissement 13 est contourné, de sorte que le fluide réfrigérant peut être dirigé vers le premier évaporateur 9 sans subir au préalable de sous-refroidissement en cédant de l'énergie au flux d'air extérieur FE.

Ceci permet de récupérer une énergie suffisante additionnée à celle du compresseur pour améliorer les performances en mode pompe à chaleur tout en bénéficiant du sous-refroidissement en mode climatisation.

Plus précisément, le fluide réfrigérant après condensation circule en série dans le premier organe de détente 31 intégrant ou non la deuxième vanne de commande telle qu'une vanne marche/arrêt puis dans le premier évaporateur 9. La détente permet d'abaisser la pression et la température du fluide réfrigérant.

Lors du passage dans le premier évaporateur 9, le fluide réfrigérant en s'évaporant absorbe la chaleur du flux d'air extérieur traversant le premier évaporateur 9. Le premier évaporateur 9 permet ainsi de récupérer de l'énergie du flux d'air extérieur FE. Ceci permet de récupérer une énergie suffisante additionnée à l'énergie du compresseur 7 pour réchauffer le fluide caloporteur au niveau du condenseur à eau 15 et donc améliorer l'énergie apportée au niveau du troisième échangeur 21 pour chauffer le flux d'air à destination de l'habitacle.

Le fluide réfrigérant quitte ensuite le premier évaporateur 9 et retourne dans le compresseur 7 pour recommencer un cycle réfrigérant.

Entre le premier organe de détente 31 et l'entrée du compresseur 7, le fluide réfrigérant est à basse pression et basse température.

En ce qui concerne le fluide caloporteur, ce dernier est par exemple mis en mouvement par la pompe 25.

Le fluide caloporteur traverse le condenseur à eau 15, dans lequel le fluide caloporteur absorbe la chaleur du fluide réfrigérant.

En sortie du condenseur à eau 15, le fluide caloporteur peut être réchauffé de nouveau par l'échangeur thermique additionnel 17.

Le fluide caloporteur traverse ensuite le radiateur de chauffage 21, où il cède des calories au flux d'air à destination de l'habitacle le traversant.

Dans ce cas, on parle de système indirect, car le chauffage du flux d'air à destination de l'habitacle est effectué via le fluide caloporteur circulant dans le circuit de fluide caloporteur 5 et non directement par le fluide réfrigérant.

Le flux d'air à destination peut en outre passer à travers l'échangeur thermique additionnel 23 en aval du radiateur de chauffage 21 dans le sens d'écoulement du flux d'air pour être chauffé de nouveau.

En atteignant l'habitacle du véhicule, par exemple sous l'action d'un pulseur (non représenté), le flux d'air chauffé permet d'augmenter la température de l'air de l'habitacle.

Le fluide caloporteur quitte ensuite le radiateur de chauffage 21 pour être dirigé de nouveau vers le condenseur à eau 15, éventuellement en étant mis en circulation par la pompe 25.

### Premier mode de déshumidification

En référence à la figure 4, on décrit maintenant le pilotage du système de conditionnement 1 selon un premier mode de déshumidification permettant de déshumidifier le flux d'air à destination de l'habitacle en le refroidissant avant que ce flux d'air ne traverse le troisième échangeur 21 du circuit de fluide caloporteur 5 pour être réchauffé.

Pour ce faire, le fluide réfrigérant sous forme de gaz chaud haute pression et haute température en sortie du compresseur 7 entre dans l'échangeur thermique bi-fluide 15 ou condenseur à eau 15, de façon à réchauffer le fluide caloporteur circulant dans le circuit de fluide caloporteur 5. En effet, dans le condenseur à eau 15, le fluide réfrigérant cède de la chaleur au fluide caloporteur. Le fluide caloporteur réchauffé retourne dans le troisième échangeur 21. Au préalable, le fluide caloporteur peut circuler dans l'échangeur thermique additionnel électrique 17 en amont du troisième échangeur 21 pour être de nouveau chauffé.

En parallèle, après avoir circulé dans le condenseur à eau 15, le fluide réfrigérant est divisé au premier point de raccordement 35 du circuit de fluide réfrigérant ; une partie du fluide réfrigérant est dirigée vers le premier évaporateur 9 et une autre partie du fluide réfrigérant vers l'échangeur de sous refroidissement 13.

Pour ce faire, la première vanne de commande 37 en amont de l'échangeur de sous-refroidissement 13 est pilotée en position d'autorisation de la circulation du fluide réfrigérant dans l'échangeur de sous-refroidissement 13, et de même la deuxième vanne de commande, par exemple intégrée au premier organe de détente 31 en amont du premier évaporateur 9, est pilotée en position d'autorisation de circulation du fluide réfrigérant dans le premier évaporateur 9.

La partie du fluide réfrigérant se dirigeant vers le premier évaporateur 9 subit une détente qui abaisse sa pression et sa température avant de passer dans le premier évaporateur 9. Le fluide réfrigérant s'évapore alors en absorbant la chaleur du flux d'air extérieur FE qui le traverse.

La partie du fluide réfrigérant traversant l'échangeur de sous refroidissement 13 subit un sous-refroidissement par échange thermique avec le flux d'air extérieur FE avant d'être dirigé vers le deuxième évaporateur 11.

La partie de fluide réfrigérant sous-refroidie circule ensuite vers le deuxième évaporateur 11 et subit une détente qui abaisse sa pression et sa température avant de passer dans le deuxième évaporateur 11, de façon à refroidir en amont du radiateur de chauffage 21 le flux d'air à destination de l'habitacle.

Le fluide réfrigérant s'évapore alors en absorbant la chaleur du flux d'air qui le traverse. Le flux d'air à destination de l'habitacle passant dans le deuxième évaporateur 11 est de la sorte refroidi et donc déshumidifié avant de passer à travers le troisième échangeur thermique 21, pour être chauffé avant de déboucher dans l'habitacle.

Dans ce cas, on parle de système indirect, car le chauffage du flux d'air à destination de l'habitacle est effectué via le fluide caloporteur circulant dans le circuit de fluide caloporteur 5 et non directement par le fluide réfrigérant.

Le flux d'air à destination peut en outre passer à travers l'échangeur thermique additionnel 23 en aval du radiateur de chauffage 21 dans le sens d'écoulement du flux d'air pour être chauffé de nouveau.

Le fluide réfrigérant en sortie du premier évaporateur 9 et du deuxième évaporateur 11 se rejoignent au deuxième point de raccordement 39 du circuit de fluide réfrigérant 3 en amont du compresseur 7 pour ensuite retourner dans le compresseur 7 pour recommencer un cycle réfrigérant.

Ce premier mode de déshumidification peut être intéressant notamment pour une température extérieure de l'ordre de 5 °°C, car il permet de chauffer suffisamment l'habitacle en désembuant suffisamment le pare-brise par exemple.

### Deuxième mode de déshumidification

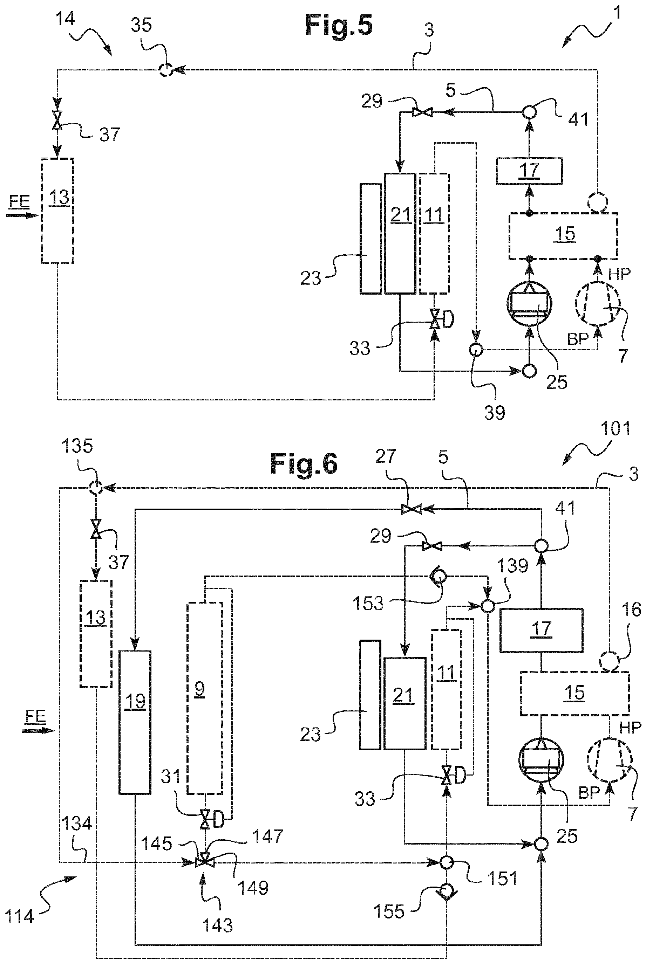

Un deuxième mode de déshumidification permettant de déshumidifier le flux d'air à destination de l'habitacle en le refroidissant avant que ce flux d'air ne traverse le troisième échangeur 21 du circuit de fluide caloporteur 5 pour être réchauffé est schématisé sur la figure 5.

Ce deuxième mode de déshumidification diffère du premier mode de déshumidification par le fait que le fluide réfrigérant après condensation dans le condenseur à eau 15 arrivant au premier point de raccordement 35 du circuit de fluide réfrigérant 3 n'est plus divisé pour être distribué d'une part vers le premier évaporateur 9 et d'autre part vers l'échangeur de sous refroidissement 13. Au contraire, le fluide réfrigérant condensé est dirigé uniquement vers l'échangeur de sous-refroidissement 13.

Pour ce faire, la première vanne de commande 37 en amont de l'échangeur de sous-refroidissement 13 est pilotée en position d'autorisation de la circulation du fluide réfrigérant dans l'échangeur de sous-refroidissement 13, tandis que la deuxième vanne de commande, par exemple intégrée au premier organe de détente 31 en amont du premier évaporateur 9, est pilotée de façon à interdire la circulation du fluide réfrigérant dans le premier évaporateur 9.

Le fluide réfrigérant traversant l'échangeur de sous refroidissement 13 subit un sous-refroidissement par échange thermique avec le flux d'air extérieur FE avant d'être dirigé vers le deuxième évaporateur 11 en subissant au préalable une détente au niveau du deuxième organe de détente 33. Le fluide réfrigérant s'évapore alors en absorbant la chaleur du flux d'air qui le traverse. Le flux d'air à destination de l'habitacle passant dans le deuxième évaporateur 11 est de la sorte refroidi et donc déshumidifié avant de passer à travers le troisième échangeur thermique 21, pour être chauffé avant de déboucher dans l'habitacle.

Comme précédemment, le flux d'air à destination peut en outre passer à travers l'échangeur thermique additionnel 23 en aval du radiateur de chauffage 21 dans le sens d'écoulement du flux d'air pour être chauffé de nouveau.

Le fluide réfrigérant peut ensuite retourner dans le compresseur 7 pour recommencer un cycle réfrigérant.

Ce deuxième mode de déshumidification peut être intéressant notamment pour une température extérieure moins froide que pour le premier mode de déshumidification, par exemple de l'ordre de 15 °C, car il permet de désembuer suffisamment le pare-brise avec un besoin de chauffage de l'habitacle moins important.

L'énergie est ici récupérée principalement par le deuxième évaporateur interne 11 et non plus par le premier évaporateur externe 9 comme dans le premier mode de déshumidification.

### Deuxième mode de réalisation

La figure 6 illustre un deuxième mode de réalisation du système de conditionnement d'air 101.

Ce deuxième mode de réalisation diffère du premier mode de réalisation par le dispositif de contournement 114 de l'échangeur de sous-refroidissement 13.

Selon le deuxième mode de réalisation illustré, la branche de contournement 134 est apte à relier la sortie du condenseur à eau 15 et notamment de la bouteille de stockage 16 au premier évaporateur 9 et/ou au deuxième évaporateur 11, et non plus seulement au premier évaporateur 9 comme dans le premier mode de réalisation.

Cette architecture permet en particulier un mode de fonctionnement supplémentaire du système de conditionnement d'air 101, appelé mode de recirculation décrit plus en détail par la suite.

En effet, selon le deuxième mode de réalisation, le dispositif de contournement 114 comprend :
- une branche de contournement 134 de l'échangeur de sous-refroidissement 13, raccordée d'une part au premier évaporateur 9 et d'autre part au deuxième évaporateur 11, et
- un premier point de raccordement 135 permettant de diriger le fluide réfrigérant condensé vers l'échangeur de sous-refroidissement 13 et/ou vers la branche de contournement 134.

De plus, le dispositif de contournement 114 comporte selon le deuxième mode de réalisation illustré :
- une première vanne de commande 37, telle qu'une vanne marche/arrêt, apte à autoriser ou interdire la circulation du fluide réfrigérant à travers l'échangeur de sous-refroidissement 13,
- au moins une deuxième vanne de commande 143 agencée sur la branche de contournement 134 apte à autoriser ou interdire la circulation du fluide réfrigérant à travers le premier échangeur thermique 9 et/ou le deuxième échangeur thermique 11.

Selon le deuxième mode de réalisation illustré, la deuxième vanne de commande 143 est une vanne trois-voies qui n'est pas intégrée au premier organe de détente 31 et qui est agencée en amont du premier évaporateur 9 et du deuxième évaporateur 11 selon le sens de circulation du fluide en mode pompe à chaleur et dans au moins un mode de déshumidification.

La vanne trois-voies 143 comprend :
- une voie d'entrée 145 reliée au premier point de raccordement 135,
- une première voie de sortie 147 reliée au premier évaporateur 9, et
- une deuxième voie de sortie 149 reliée au deuxième évaporateur 11.

Le circuit de fluide réfrigérant 3 comprend en outre un deuxième point de raccordement 139 qui rassemble le fluide réfrigérant en sortie du premier évaporateur 9 et en sortie du deuxième échangeur thermique 11 pour le canaliser vers le compresseur 7. Le deuxième point de raccordement 139 est donc relié au premier évaporateur 9, au deuxième évaporateur 11 et au compresseur 7.

Le circuit de fluide réfrigérant 3 comprend encore dans l'exemple de la figure 6 un troisième point de raccordement 151 raccordé à la branche de contournement 134, à la sortie de l'échangeur de sous-refroidissement 13 et au deuxième évaporateur 11.

Le circuit de fluide réfrigérant 3 peut en outre comporter au moins un clapet anti-retour 153, 155.

Selon le deuxième mode de réalisation illustré, un premier clapet anti-retour 153 est agencé sur la conduite de canalisation entre le premier échangeur thermique 9 et le deuxième point de raccordement 139 raccordé au compresseur 7.

Ce premier clapet anti-retour 153 est apte à empêcher un retour de fluide réfrigérant en sortie du deuxième échangeur thermique 11 vers le premier échangeur thermique 9. Le fluide réfrigérant en sortie du deuxième échangeur thermique est donc dirigé obligatoirement vers le compresseur 7.

Le circuit de fluide réfrigérant 3 comporte selon le deuxième mode de réalisation illustré, un deuxième clapet anti-retour 155 agencé sur la conduite de canalisation entre l'échangeur de sous-refroidissement 13 et le troisième point de raccordement 151 raccordé au deuxième évaporateur 11.

Ce deuxième clapet anti-retour 155 est apte à empêcher un retour de fluide réfrigérant en sortie de la branche de contournement 134, par exemple en sortie du premier évaporateur 9, vers l'échangeur de sous-refroidissement 13. Le fluide réfrigérant en sortie de la branche de contournement 134 est donc dirigé obligatoirement vers le deuxième échangeur thermique 11 avant de rejoindre le compresseur 7.

### Mode climatisation

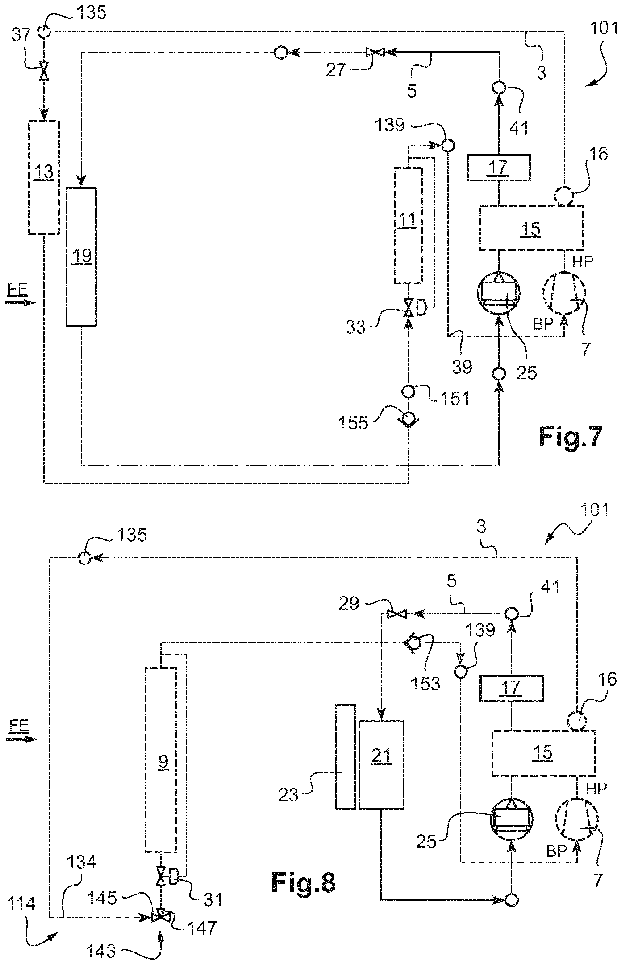

Le système de conditionnement d'air 101 peut être piloté en un mode de climatisation schématisé sur la figure 7 de façon similaire au premier mode de réalisation.

Notamment, le fluide réfrigérant après condensation dans l'échangeur thermique bi-fluide 15 est dirigé vers l'échangeur de sous-refroidissement 13.

Pour ce faire, la première vanne de commande 37, par exemple une vanne marche/arrêt 37, est pilotée en position d'autorisation de circulation de fluide réfrigérant dans l'échangeur de sous-refroidissement 13, tandis que la deuxième vanne de commande 143 est pilotée en position d'interdiction de circulation du fluide réfrigérant dans le premier évaporateur 9 ou le deuxième évaporateur 11. Les voies de sorties 147 et 149 de la vanne trois-voies 143 sont fermées.

La suite du trajet du fluide réfrigérant et la circulation du fluide caloporteur restent identiques au premier mode de réalisation.

### Mode pompe à chaleur

En référence à la figure 8, le système de conditionnement d'air 101 peut être piloté dans un mode de pompe à chaleur de façon similaire au premier mode de réalisation.

Notamment, le fluide réfrigérant après condensation dans l'échangeur thermique bi-fluide est ensuite dirigé vers le premier évaporateur 9 en contournant l'échangeur de sous-refroidissement 13. Pour ce faire, la première vanne de commande 37, par exemple une vanne marche/arrêt 37, est pilotée en position d'interdiction de circulation de fluide réfrigérant dans l'échangeur de sous-refroidissement 13, tandis que la deuxième vanne de commande 143 est pilotée en position d'autorisation de circulation du fluide réfrigérant dans le premier évaporateur 9. Par exemple, la première voie de sortie 147 de la vanne trois-voies 143 est ouverte tandis que la deuxième voie de sortie 149 est fermée, de sorte que le fluide réfrigérant peut être dirigé vers le premier évaporateur 9 en subissant une détente en amont.

La suite du trajet du fluide réfrigérant et la circulation du fluide caloporteur restent identiques au premier mode de réalisation.

### Mode de recirculation

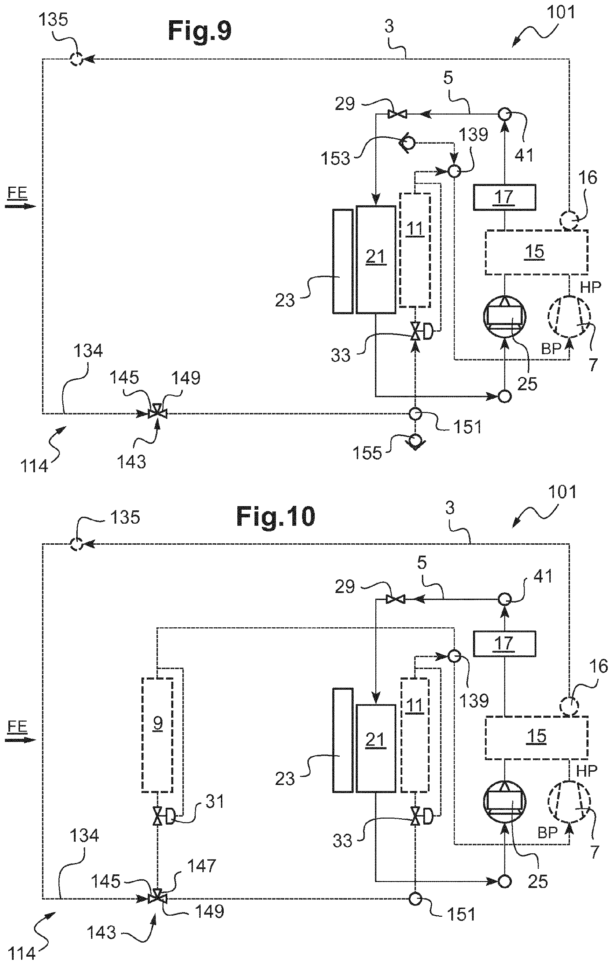

Un nouveau mode de fonctionnement du système de conditionnement d'air 101 est illustré sur la figure 9.

Le mode de recirculation du flux d'air de l'habitacle peut être utilisé pour un besoin de chauffage de l'habitacle et/ou pour déshumidifier le flux d'air à destination de l'habitacle.

Le mode de recirculation du flux d'air de l'habitacle permet de répondre au besoin de chauffage en consommant moins qu'un pilotage en pompe à chaleur.

Le mode de recirculation pour déshumidifier le flux d'air à destination de l'habitacle peut être utilisé pour une température extérieure par exemple de l'ordre de 10 °C.

Dans le mode de recirculation du flux d'air décrit, il n'y a pas d'échange thermique entre le fluide réfrigérant et le flux d'air extérieur.

Le fluide réfrigérant sous forme de gaz chaud haute pression et haute température en sortie du compresseur 7 entre dans l'échangeur thermique bi-fluide 15 ou condenseur à eau 15, de façon à réchauffer le fluide caloporteur circulant dans le circuit de fluide caloporteur 5. Dans le condenseur à eau 15, le fluide réfrigérant cède de la chaleur au fluide caloporteur.

Le fluide caloporteur réchauffé retourne dans le troisième échangeur 21. Au préalable, le fluide caloporteur peut ou non circuler dans l'échangeur thermique additionnel électrique 17 en amont du troisième échangeur 21 pour être de nouveau chauffé.

En parallèle, après avoir circulé dans le condenseur à eau 15, le fluide réfrigérant arrivant au premier point de raccordement 135 du circuit de fluide réfrigérant est dirigé vers la branche de contournement 134 de l'échangeur de sous-refroidissement 13. La première vanne de commande 37 est pilotée en position d'interdiction de circulation du fluide réfrigérant au sein de l'échangeur de sous-refroidissement 13.

Dans la branche de contournement 134, le fluide réfrigérant est dirigé vers le deuxième évaporateur 11. Pour cela, dans l'exemple illustré la première voie de sortie 147 de la vanne trois-voies 143 est fermée tandis que la deuxième voie de sortie 149 de la vanne trois-voies 143 est ouverte.

Le deuxième clapet anti-retour 155 peut empêcher que le fluide réfrigérant arrivant au niveau du troisième point de raccordement 151 ne retourne dans l'échangeur de sous-refroidissement 13 au lieu de circuler dans le deuxième évaporateur 11. Ceci est particulièrement avantageux lorsque le système de conditionnement 101 est piloté en mode de recirculation pour répondre à un besoin de chauffage de l'habitacle avec une température extérieure froide, par exemple de l'ordre de 0 °C, car les échangeurs en face avant dont l'échangeur de sous-refroidissement 13, présentent une pression inférieure à la pression du deuxième évaporateur 11 interne, ce qui engendre un risque d'accumulation du fluide réfrigérant dans ces échangeurs en face avant.

Le fluide réfrigérant circulant vers le deuxième évaporateur 11 subit une détente qui abaisse sa pression et sa température avant de passer dans le deuxième évaporateur 11. Le fluide réfrigérant s'évapore alors en absorbant la chaleur du flux d'air qui le traverse. Le flux d'air à destination de l'habitacle passant dans le deuxième évaporateur 11 est de la sorte refroidi et déshumidifié avant de passer à travers le troisième échangeur thermique 21, pour être chauffé avant de déboucher dans l'habitacle.

Le fluide réfrigérant retourne ensuite dans le compresseur 7 pour recommencer un cycle réfrigérant.

Le premier clapet anti-retour 153 peut empêcher que le fluide réfrigérant arrivant au niveau du deuxième point de raccordement 139 ne retourne dans le premier évaporateur 9 en face avant au lieu de circuler vers le compresseur 7. Comme précédemment, ceci est particulièrement avantageux lorsque le système de conditionnement 101 est piloté en mode de recirculation pour répondre à un besoin de chauffage de l'habitacle avec une température extérieure froide, par exemple de l'ordre de 0 °C, car ces conditions présentent un risque d'accumulation du fluide réfrigérant dans les échangeurs en face avant, dont le premier évaporateur 9.

### Premier mode de déshumidification

En référence à la figure 10, on décrit maintenant le pilotage du système de conditionnement 101 selon un premier mode de déshumidification permettant de déshumidifier le flux d'air à destination de l'habitacle en le refroidissant avant que ce flux d'air ne traverse le troisième échangeur 21 du circuit de fluide caloporteur 5 pour être réchauffé.

Ce premier mode de déshumidification du deuxième mode de réalisation du système de conditionnement d'air 101 diffère du premier mode de déshumidification du premier mode de réalisation du système de conditionnement d'air 1 par le fait que le fluide réfrigérant après avoir circulé dans le condenseur à eau 15 arrivant au premier point de raccordement 135 est dirigé vers la branche de contournement 134 et n'est plus divisé vers le premier évaporateur 9 et vers l'échangeur de sous-refroidissement 13.

L'échangeur de sous-refroidissement 13 est contourné. Pour ce faire, la première vanne de commande 37 en amont de l'échangeur de sous-refroidissement 13 est pilotée en position d'interdiction de la circulation du fluide réfrigérant dans l'échangeur de sous-refroidissement 13.

Dans la branche de contournement 134 le fluide réfrigérant est divisé à la vanne trois-voies 143 : une partie du fluide réfrigérant est dirigée vers le premier évaporateur 9 et une autre partie du fluide réfrigérant vers le deuxième évaporateur 11.

Selon l'exemple illustré, la vanne trois-voies 143 est pilotée de sorte que les deux voies de sorties 147 et 149 soient ouvertes pour permettre la circulation du fluide réfrigérant dans le premier évaporateur 9 ainsi que dans le deuxième évaporateur 11.

Ceci permet de récupérer de l'énergie aussi bien en face avant au sein du premier évaporateur 9 qu'à l'intérieur de l'installation de climatisation et de chauffage au sein du deuxième évaporateur 11.

La partie du fluide réfrigérant se dirigeant vers le premier évaporateur 9 subit une détente qui abaisse sa pression et sa température avant de passer dans le premier évaporateur 9. Le fluide réfrigérant s'évapore alors en absorbant la chaleur du flux d'air extérieur FE qui le traverse. Ceci permet de récupérer des calories du flux d'air extérieur FE.

De même, la partie du fluide réfrigérant se dirigeant vers le deuxième évaporateur 11 subit en amont une détente qui abaisse sa pression et sa température avant de passer dans le deuxième évaporateur 11. Le fluide réfrigérant s'évapore alors en absorbant la chaleur du flux d'air à destination de l'habitacle qui le traverse. Le flux d'air à destination de l'habitacle passant dans le deuxième évaporateur 11 est de la sorte refroidi et donc déshumidifié avant de passer à travers le troisième échangeur thermique 21, pour être chauffé avant de déboucher dans l'habitacle.

Le fluide réfrigérant en sortie du premier évaporateur 9 et du deuxième évaporateur 11 se rejoignent au deuxième point de raccordement 139 du circuit de fluide réfrigérant 3 en amont du compresseur 7 pour ensuite retourner dans le compresseur 7 pour recommencer un cycle réfrigérant.

L'énergie emmagasinée au niveau des deux évaporateurs 9 et 11, additionnée à celle du compresseur 7 permet de chauffer suffisamment le fluide caloporteur au niveau du condenseur à eau 15 et cette énergie est injectée dans le radiateur de chauffage 21 via le fluide caloporteur chauffé.

Ce premier mode de déshumidification peut être intéressant notamment pour une température extérieure de l'ordre de 0 °C pour répondre à un besoin de chauffage et de désembuage par exemple.

### Deuxième mode de déshumidification

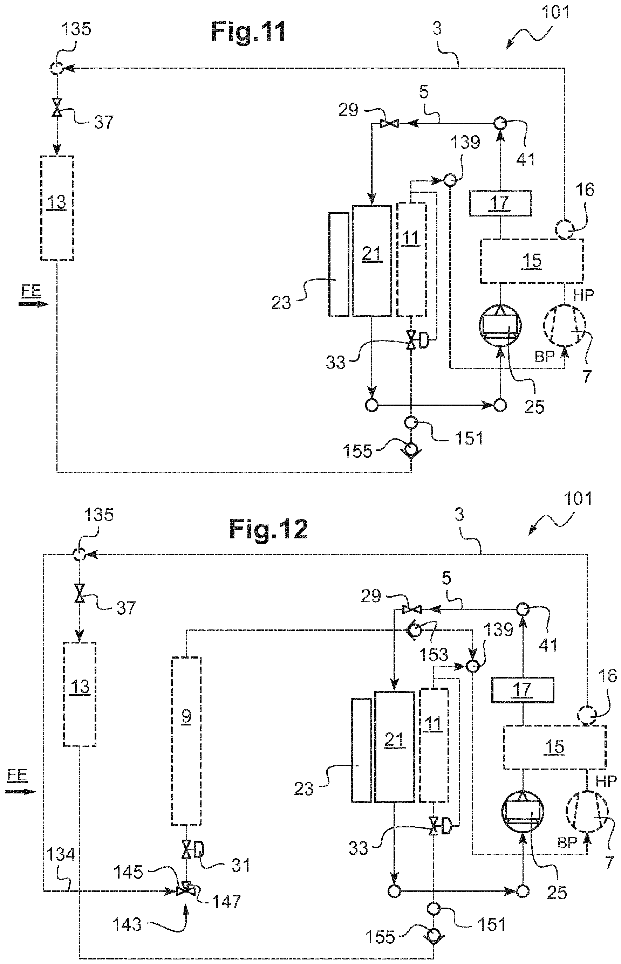

Le système de conditionnement d'air 101 peut aussi être piloté selon un deuxième mode de déshumidification (figure 11) de façon similaire au deuxième mode de déshumidification du premier mode de réalisation du système de conditionnement d'air 1.

Notamment, le fluide réfrigérant après condensation dans l'échangeur thermique bi-fluide 15 arrivant au premier point de raccordement 135 du circuit de fluide réfrigérant 3 est dirigé uniquement vers l'échangeur de sous-refroidissement 13.

Pour ce faire, la première vanne de commande 37 en amont de l'échangeur de sous-refroidissement 13 est pilotée en position d'autorisation de la circulation du fluide réfrigérant dans l'échangeur de sous-refroidissement 13, tandis que la deuxième vanne de commande 143 est pilotée de façon à interdire la circulation du fluide réfrigérant dans le premier évaporateur 9 et dans le deuxième évaporateur 11 depuis la branche de contournement 134. Pour cela, les vois de sortie 147 et 149 de la vanne trois-voies 143 dans cet exemple peuvent être fermées.

La suite du trajet du fluide réfrigérant et la circulation du fluide caloporteur restent identiques au premier mode de réalisation.

Ce deuxième mode de déshumidification peut être intéressant notamment pour une température extérieure moins froide que pour le premier mode de déshumidification, par exemple de l'ordre de 20 °C, car il permet de désembuer suffisamment le pare-brise avec un besoin de chauffage de l'habitacle moins important.

### Troisième mode de déshumidification

En référence à la figure 12, on décrit maintenant le pilotage du système de conditionnement 101 selon un troisième mode de déshumidification permettant de déshumidifier le flux d'air à destination de l'habitacle en le refroidissant avant que ce flux d'air ne traverse le troisième échangeur 21 du circuit de fluide caloporteur 5 pour être réchauffé, de façon similaire au premier mode de déshumidification du premier mode de réalisation du système de conditionnement d'air 1.

Pour ce faire, le fluide réfrigérant sous forme de gaz chaud haute pression et haute température en sortie du compresseur 7 entre dans l'échangeur thermique bi-fluide 15 ou condenseur à eau 15, de façon à réchauffer le fluide caloporteur circulant dans le circuit de fluide caloporteur 5. En effet, dans le condenseur à eau 15, le fluide réfrigérant cède de la chaleur au fluide caloporteur. Le fluide caloporteur réchauffé retourne dans le troisième échangeur 21. Au préalable, le fluide caloporteur peut circuler dans l'échangeur thermique additionnel électrique 17 en amont du troisième échangeur 21 pour être de nouveau chauffé.

En parallèle, après avoir circulé dans le condenseur à eau 15, le fluide réfrigérant est divisé au premier point de raccordement 135 du circuit de fluide réfrigérant ; une partie du fluide réfrigérant est dirigée vers le premier évaporateur 9 et une autre partie du fluide réfrigérant vers l'échangeur de sous refroidissement 13.

Pour ce faire, la première vanne de commande 37 en amont de l'échangeur de sous-refroidissement 13 est pilotée en position d'autorisation de la circulation du fluide réfrigérant dans l'échangeur de sous-refroidissement 13, et de même la deuxième vanne de commande 143 en amont du premier évaporateur 9, est pilotée en position d'autorisation de circulation du fluide réfrigérant dans le premier évaporateur 9.

La partie du fluide réfrigérant se dirigeant vers le premier évaporateur 9 subit une détente qui abaisse sa pression et sa température avant de passer dans le premier évaporateur 9. Le fluide réfrigérant s'évapore alors en absorbant la chaleur du flux d'air extérieur FE qui le traverse.

La partie du fluide réfrigérant traversant l'échangeur de sous refroidissement 13 subit un sous-refroidissement par échange thermique avec le flux d'air extérieur FE avant d'être dirigé vers le deuxième évaporateur 11.

La partie de fluide réfrigérant sous-refroidie circule ensuite vers le deuxième évaporateur 11 et subit une détente qui abaisse sa pression et sa température avant de passer dans le deuxième évaporateur 11, de façon à refroidir en amont du radiateur de chauffage 21 le flux d'air à destination de l'habitacle.

Le fluide réfrigérant s'évapore alors en absorbant la chaleur du flux d'air qui le traverse. Le flux d'air à destination de l'habitacle passant dans le deuxième évaporateur 11 est de la sorte refroidi et donc déshumidifié avant de passer à travers le troisième échangeur thermique 21, pour être chauffé avant de déboucher dans l'habitacle.

Dans ce cas, on parle de système indirect, car le chauffage du flux d'air à destination de l'habitacle est effectué via le fluide caloporteur circulant dans le circuit de fluide caloporteur 5 et non directement par le fluide réfrigérant.

Le flux d'air à destination peut en outre passer à travers l'échangeur thermique additionnel 23 en aval du radiateur de chauffage 21 dans le sens d'écoulement du flux d'air pour être chauffé de nouveau.

Le fluide réfrigérant en sortie du premier évaporateur 9 et du deuxième évaporateur 11 se rejoignent au deuxième point de raccordement 139 du circuit de fluide réfrigérant 3 en amont du compresseur 7 pour ensuite retourner dans le compresseur 7 pour recommencer un cycle réfrigérant.

Ce troisième mode de déshumidification peut être intéressant notamment pour une température extérieure de l'ordre de 5 °C, car il permet de chauffer suffisamment l'habitacle en désembuant suffisamment le pare-brise par exemple.

On comprend donc qu'un tel système de conditionnement 1, 101 selon le premier ou le deuxième mode de réalisation peut être piloté avec un sous-refroidissement du fluide réfrigérant par exemple en mode de climatisation ou certains modes de déshumidification de façon à bénéficier de l'évacuation de calories vers l'extérieur ce qui améliore les performances, tout en pouvant être piloté, en particulier pour répondre à un besoin de chauffage, en contournant le sous-refroidissement pour ne pas perdre de calories vers l'extérieur.

## Revendications

1. Système de conditionnement thermique d'un flux d'air pour véhicule automobile comportant un circuit de fluide réfrigérant (3), le circuit de fluide réfrigérant (3) comprenant un condenseur (15) et un échangeur de sous-refroidissement (13) du fluide réfrigérant agencé en aval du condenseur (15) dans un sens de circulation du fluide réfrigérant,
ledit circuit de fluide réfrigérant (3) comprenant en outre au moins une branche de contournement (34, 134) de l'échangeur de sous-refroidissement (13) pour la circulation du fluide réfrigérant en contournant l'échangeur de sous-refroidissement (13), le système de conditionnement thermique d'un flux d'air comporte également un circuit de fluide caloporteur (5) dans lequel le condenseur (15) est un échangeur thermique bi-fluide agencé conjointement sur le circuit de fluide caloporteur (5) et le circuit de fluide réfrigérant (3), et
- le circuit de fluide réfrigérant (3) comprend : un premier évaporateur (9) pour un échange thermique avec un flux d'air extérieur (FE), et un deuxième évaporateur (11) pour un échange thermique avec un flux d'air à destination de l'habitacle dudit véhicule, et
- la branche de contournement (34, 134) est reliée à au moins un des premier (9) et deuxième (11) évaporateurs en contournant l'échangeur de sous-refroidissement (13),
**caractérisé en ce que** le circuit de fluide réfrigérant (3) étant configuré pour que après avoir circulé dans l'échangeur thermique bi-fluide (15), le fluide réfrigérant est divisé à un premier point de raccordement (35, 135) du circuit de fluide réfrigérant de sorte qu'une partie du fluide réfrigérant est dirigée vers le premier évaporateur (9) et une autre partie du fluide réfrigérant vers l'échangeur de sous-refroidissement (13).

2. Système selon la revendication 1, dans lequel le circuit de fluide réfrigérant (3) comprend une vanne de commande (37) agencée en amont de l'échangeur de sous-refroidissement (13) pour autoriser ou interdire la circulation du fluide réfrigérant dans l'échangeur de sous-refroidissement (13).

3. Système selon l'une des revendications précédentes, dans lequel le circuit de fluide réfrigérant (3) comprend au moins une vanne de commande (33, 143) agencée en amont d'au moins un des premier (9) et deuxième (11) évaporateurs dans un sens de circulation du fluide réfrigérant et apte à autoriser ou interdire la circulation du fluide réfrigérant dans au moins un des premier (9) et deuxième (11) évaporateurs.

4. Système selon l'une des revendications précédentes, dans lequel le circuit de fluide réfrigérant (3) comprend :
- un premier organe de détente (31) agencé en amont du premier évaporateur (9) selon un sens de circulation du fluide réfrigérant et
- un deuxième organe de détente (33) agencé en amont du deuxième échangeur thermique (11) selon le sens de circulation du fluide réfrigérant.

5. Système selon les revendications 3 et 4, dans lequel au moins organe de détente (31) comprend une vanne de commande intégrée apte à autoriser ou interdire la circulation du fluide réfrigérant au sein de l'évaporateur (9) associé.

6. Système selon l'une des revendications 1 à 4, dans lequel le circuit de fluide réfrigérant (3) comprend une vanne trois-voies (143) avec une voie d'entrée (145), une première voie de sortie (147) raccordée au premier évaporateur (9) et une deuxième voie de sortie (149) raccordée au deuxième évaporateur (11).

7. Système selon l'une quelconque des revendications précédentes, dans lequel le circuit de fluide réfrigérant (3) comprend un point de raccordement (35, 135) raccordé d'une part à la branche de contournement (34, 134) de façon à diriger le fluide réfrigérant en sortie de l'échangeur bi-fluide vers le premier évaporateur (9) et/ou vers le deuxième évaporateur (11) et raccordé d'autre part à l'échangeur de sous-refroidissement (13).

8. Système selon la revendication précédente, dans lequel le point de raccordement (35) raccordé d'une part à la branche de contournement (34) et d'autre part à l'échangeur de sous-refroidissement (13) est agencé en amont de l'échangeur de sous-refroidissement (13) selon un sens de circulation du fluide réfrigérant.

9. Système selon l'une quelconque des revendications précédentes, dans lequel le circuit de fluide réfrigérant (3) comprend un compresseur (7) et un point de raccordement (39, 139) agencé en amont du compresseur (7) selon un sens de circulation du fluide réfrigérant et apte à rassembler le fluide réfrigérant en sortie du premier évaporateur (9) et en sortie du deuxième évaporateur (11) pour canaliser le fluide réfrigérant vers le compresseur (7).

10. Système selon l'une quelconque des revendications précédentes, comprenant un point de raccordement (151) raccordé à la branche de contournement (134), à la sortie de l'échangeur de sous-refroidissement (13) et au deuxième évaporateur (11).

11. Système selon l'une des revendications 9 ou 10, dans lequel le circuit de fluide réfrigérant (3) comprend au moins un clapet anti-retour (153, 155) agencé entre un point de raccordement (139, 151) et l'échangeur de sous-refroidissement (13) ou le premier évaporateur (9).

12. Système selon la revendication 1, dans lequel le circuit de fluide caloporteur (5) comprend un radiateur de chauffage (21) agencé en aval du deuxième échangeur thermique (11) selon un sens d'écoulement du flux d'air à destination de l'habitacle, et en aval du condenseur (15) selon un sens de circulation du fluide caloporteur.

13. Installation de chauffage, ventilation et/ou climatisation **caractérisée en ce qu'**elle comporte un système de conditionnement thermique (1) d'un flux d'air selon l'une quelconque des revendications précédentes.

14. Procédé de pilotage du système de conditionnement d'un flux d'air selon l'une quelconque des revendications 1 à 12, comprenant les étapes suivantes :
- on condense le fluide réfrigérant,
- on pilote la circulation du fluide réfrigérant condensé dans la branche de contournement (34, 134),
- on dirige le fluide réfrigérant vers le premier évaporateur (9) et/ou vers le deuxième évaporateur (11), le fluide réfrigérant étant divisé à un premier point de raccordement (35, 135) du circuit de fluide réfrigérant de sorte qu'une partie du fluide réfrigérant est dirigée vers le premier évaporateur (9) et une autre partie du fluide réfrigérant vers l'échangeur de sous-refroidissement (13),
- on dirige le fluide réfrigérant en sortie du premier évaporateur (9) et/ou du deuxième évaporateur (11) vers un compresseur (7).

15. Procédé de pilotage selon la revendication 14, dans lequel on interdit la circulation du fluide réfrigérant condensé dans l'échangeur de sous-refroidissement (13), de sorte que le fluide réfrigérant circule dans la branche de contournement (34, 134) en contournant l'échangeur de sous-refroidissement (13).

16. Procédé de pilotage selon la revendication 15, dans lequel on autorise la circulation du fluide réfrigérant condensé dans l'échangeur de sous-refroidissement (13), de sorte que le fluide réfrigérant circule en parallèle dans la branche de contournement (34, 134) et dans l'échangeur de sous-refroidissement (13).

17. Procédé de pilotage selon l'une quelconque des revendications 14 à 16, dans lequel on commande la circulation d'un fluide caloporteur dans le condenseur (15) pour un échange thermique avec le fluide réfrigérant, puis on commande la circulation du fluide caloporteur dans un radiateur de chauffage (21) agencé pour conditionner le flux d'air à destination de l'habitacle.

## Patentansprüche

1. System zur Temperaturkonditionierung eines Luftstroms für ein Kraftfahrzeug, welches einen Kältemittelkreislauf (3) aufweist, wobei der Kältemittelkreislauf (3) einen Kondensator (15) und einen Wärmetauscher zur Unterkühlung (13) des Kältemittels, der stromabwärts des Kondensators (15) in einer Strömungsrichtung des Kältemittels angeordnet ist, umfasst,
wobei der Kältemittelkreislauf (3) außerdem wenigstens einen Zweig zur Umgehung (34, 134) des Unterkühlungs-Wärmetauschers (13) zur Zirkulation des Kältemittels unter Umgehung des Unterkühlungs-Wärmetauschers (13) umfasst, wobei das System zur Temperaturkonditionierung eines Luftstroms außerdem einen Wärmeträgerfluidkreislauf (5) aufweist, in welchem der Kondensator (15) ein Doppelfluid-Wärmetauscher ist, der gleichzeitig im Wärmeträgerfluidkreislauf (5) und im Kältemittelkreislauf (3) angeordnet ist, und
- der Kältemittelkreislauf (3) umfasst: einen ersten Verdampfer (9) für einen Wärmeaustausch mit einem Außenluftstrom (FE) und einen zweiten Wärmetauscher (11) für einen Wärmeaustausch mit einem für den Innenraum des Fahrzeugs bestimmten Luftstrom, und
- der Umgehungszweig (34, 134) mit dem ersten (9) und/oder dem zweiten (11) Verdampfer unter Umgehung des Unterkühlungs-Wärmetauschers (13) verbunden ist,
**dadurch gekennzeichnet, dass** der Kältemittelkreislauf (3) dafür ausgelegt ist, dass das Kältemittel, nachdem es durch den Doppelfluid-Wärmetauscher (15) geströmt ist, an einem ersten Anschlusspunkt (35, 135) des Kältemittelkreislaufs derart aufgeteilt wird, dass ein Teil des Kältemittels zum ersten Verdampfer (9) und ein anderer Teil des Kältemittels zum Unterkühlungs-Wärmetauscher (13) geleitet wird.

2. System nach Anspruch 1, wobei der Kältemittelkreislauf (3) ein Steuerventil (37) umfasst, das stromaufwärts des Unterkühlungs-Wärmetauschers (13) angeordnet ist, um die Zirkulation des Kältemittels durch den Unterkühlungs-Wärmetauscher (13) zu ermöglichen oder zu verhindern.

3. System nach einem der vorhergehenden Ansprüche, wobei der Kältemittelkreislauf (3) wenigstens ein Steuerventil (33, 143) umfasst, das stromaufwärts des ersten (9) und/oder zweiten (11) Verdampfers in einer Strömungsrichtung des Kältemittels angeordnet ist und in der Lage ist, die Zirkulation des Kältemittels durch den ersten (9) und/oder zweiten (11) Verdampfer zu ermöglichen oder zu verhindern.

4. System nach einem der vorhergehenden Ansprüche, wobei der Kältemittelkreislauf (3) umfasst:
- ein erstes Expansionsorgan (31), das stromaufwärts des ersten Verdampfers (9) in einer Strömungsrichtung des Kältemittels angeordnet ist, und
- ein zweites Expansionsorgan (33), das stromaufwärts des zweiten Verdampfers (11) in der Strömungsrichtung des Kältemittels, angeordnet ist.

5. System nach den Ansprüchen 3 und 4, wobei zumindest ein Expansionsorgan (31) ein integriertes Steuerventil umfasst, das geeignet ist, die Zirkulation des Kältemittels innerhalb des zugeordneten Verdampfers (9) zu ermöglichen oder zu verhindern.

6. System nach einem der Ansprüche 1 bis 4, wobei der Kältemittelkreislauf (3) ein Dreiwegeventil (143) mit einem Eingangsport (145), einem ersten Ausgangsport (147), der an den ersten Verdampfer (9) angeschlossen ist, und einem zweiten Ausgangsport (149), der an den zweiten Verdampfer (11) angeschlossen ist, umfasst.

7. System nach einem der vorhergehenden Ansprüche, wobei der Kältemittelkreislauf (3) einen Anschlusspunkt (35, 135) umfasst, der einerseits an den Umgehungszweig (34, 134) angeschlossen ist, um das aus dem Doppelfluid-Wärmetauscher ausströmende Kältemittel zum ersten Verdampfer (9) und/oder zum zweiten Verdampfer (11) zu leiten, und andererseits an den Unterkühlungs-Wärmetauscher (13) angeschlossen ist.

8. System nach dem vorhergehenden Anspruch, wobei der Anschlusspunkt (35), der einerseits an den Umgehungszweig (34) und andererseits an den Unterkühlungs-Wärmetauscher (13) angeschlossen ist, stromaufwärts des Unterkühlungs-Wärmetauschers (13) in einer Strömungsrichtung des Kältemittels angeordnet ist.

9. System nach einem der vorhergehenden Ansprüche, wobei der Kältemittelkreislauf (3) einen Kompressor (7) umfasst, sowie einen Anschlusspunkt (39, 139) der stromaufwärts des Kompressors (7) in einer Strömungsrichtung des Kältemittels angeordnet ist und geeignet ist, das aus dem ersten Verdampfer (9) ausströmende und das aus dem zweiten Verdampfer (11) ausströmende Kältemittel zusammenzuführen, um das Kältemittel zum Kompressor (7) zu leiten.

10. System nach einem der vorhergehenden Ansprüche, welches einen Anschlusspunkt (151) umfasst, der an den Umgehungszweig (134), an den Ausgang des Unterkühlungs-Wärmetauschers (13) und an den zweiten Verdampfer (11) angeschlossen ist.

11. System nach einem der Ansprüche 9 oder 10, wobei der Kältemittelkreislauf (3) wenigstens ein Rückschlagventil (153, 155) umfasst, das zwischen einem Anschlusspunkt (139, 151) und dem Unterkühlungs-Wärmetauscher (13) oder dem ersten Verdampfer (9) angeordnet ist.

12. System nach Anspruch 1, wobei der Wärmeträgerfluidkreislauf (5) einen Heizkörper (21) umfasst, der stromabwärts des zweiten Wärmetauschers (11) in einer Strömungsrichtung des Luftstroms zum Fahrzeuginnenraum und stromabwärts des Kondensators (15) in einer Strömungsrichtung des Wärmeträgerfluids angeordnet ist.

13. Heizungs-, Lüftungs- und/oder Klimaanlage, **dadurch gekennzeichnet, dass** sie ein System zur Temperaturkonditionierung (1) eines Luftstroms nach einem der vorhergehenden Ansprüche umfasst.

14. Verfahren zur Steuerung des Systems zur Konditionierung eines Luftstroms nach einem der Ansprüche 1 bis 12, welches die folgenden Schritte umfasst:
- Kondensieren des Kältemittels,
- Steuern der Zirkulation des kondensierten Kältemittels in dem Umgehungszweig (34, 134),
- Leiten des Kältemittels zum ersten Verdampfer (9) und/oder zum zweiten Verdampfer (11), wobei das Kältemittel an einem ersten Anschlusspunkt (35, 135) des Kältemittelkreislaufs derart aufgeteilt wird, dass ein Teil des Kältemittels zum ersten Verdampfer (9) und ein anderer Teil des Kältemittels zum Unterkühlungs-Wärmetauscher (13) geleitet wird,
- Leiten des Kältemittels, das aus dem ersten Verdampfer (9) und/oder aus dem zweiten Verdampfer (11) ausströmt, zu einem Kompressor (7) .

15. Verfahren zur Steuerung nach Anspruch 14, wobei die Zirkulation des kondensierten Kältemittels durch den Unterkühlungs-Wärmetauscher (13) verhindert wird, so dass das Kältemittel unter Umgehung des Unterkühlungs-Wärmetauschers (13) durch den Umgehungszweig (34, 134) zirkuliert.

16. Verfahren zur Steuerung nach Anspruch 15, wobei die Zirkulation des kondensierten Kältemittels durch den Unterkühlungs-Wärmetauscher (13) ermöglicht wird, so dass das Kältemittel parallel durch den Umgehungszweig (34, 134) und durch den Unterkühlungs-Wärmetauscher (13) zirkuliert.

17. Verfahren zur Steuerung nach einem der Ansprüche 14 bis 16, wobei die Zirkulation eines Wärmeträgerfluids durch den Kondensator (15) für einen Wärmeaustausch mit dem Kältemittel gesteuert wird und anschließend die Zirkulation des Wärmeträgerfluids durch einen Heizkörper (21) gesteuert wird, der dafür ausgelegt ist, den Luftstrom zum Fahrzeuginnenraum zu konditionieren.

## Claims

1. Thermal conditioning system for an airflow for a motor vehicle comprising a refrigerant circuit (3), the refrigerant circuit (3) comprising a condenser (15) and an undercooling exchanger (13) for the refrigerant arranged downstream of the condenser (15) in a direction of circulation of the refrigerant,
said refrigerant circuit (3) further comprising at least one bypass branch (34, 134) of the undercooling exchanger (13) for the circulation of the refrigerant by bypassing the undercooling exchanger (13), the thermal conditioning system for an airflow also comprises a heat transfer fluid circuit (5) in which the condenser (15) is a two-fluid heat exchanger arranged jointly on the heat transfer fluid circuit (5) and the refrigerant circuit (3), and
- the refrigerant circuit (3) comprises: a first evaporator (9) for a heat exchange with an outside airflow (FE), and a second evaporator (11) for a heat exchange with an airflow intended for the interior of said vehicle, and
- the bypass branch (34, 134) is linked to at least one of the first (9) and second (11) evaporators by bypassing the undercooling exchanger (13),
**characterized in that**, the refrigerant circuit (3) being configured so that, after having circulated in the two-fluid heat exchanger (15), the refrigerant is divided at a first connection point (35, 135) of the refrigerant circuit so that a part of the refrigerant is directed to the first evaporator (9) and another part of the refrigerant to the undercooling exchanger (13).

2. System according to Claim 1, in which the refrigerant circuit (3) comprises a control valve (37) arranged upstream of the undercooling exchanger (13) to allow or prevent the circulation of the refrigerant in the undercooling exchanger (13).

3. System according to one of the preceding claims, in which the refrigerant circuit (3) comprises at least one control valve (33, 143) arranged upstream of at least one of the first (9) and second (11) evaporators in a direction of circulation of the refrigerant and capable of allowing or preventing the circulation of the refrigerant in at least one of the first (9) and second (11) evaporators.

4. System according to one of the preceding claims, in which the refrigerant circuit (3) comprises:
- a first expansion member (31) arranged upstream of the first evaporator (9) in a direction of circulation of the refrigerant, and
- a second expansion member (33) arranged upstream of the second heat exchanger (11) in the direction of circulation of the refrigerant.

5. System according to Claims 3 and 4, in which at least expansion member (31) comprises an integrated control valve capable of allowing or preventing the circulation of the refrigerant in the associated evaporator (9).

6. System according to one of Claims 1 to 4, in which the refrigerant circuit (3) comprises a three-way valve (143) with an input way (145), a first output way (147) connected to the first evaporator (9) and a second output way (149) connected to the second evaporator (11).

7. System according to one of the preceding claims, in which the refrigerant circuit (3) comprises a connection point (35, 135) connected on one side to the bypass branch (34, 134) so as to direct the refrigerant at the output of the two-fluid exchanger to the first evaporator (9) and/or to the second evaporator (11) and connected on the other side to the undercooling exchanger (13).

8. System according to the preceding claim, in which the connection point (35) connected on one side to the bypass branch (34) and on the other side to the undercooling exchanger (13) is arranged upstream of the undercooling exchanger (13) in a direction of circulation of the refrigerant.

9. System according to any one of the preceding claims, in which the refrigerant circuit (3) comprises a compressor (7) and a connection point (39, 139) arranged upstream of the compressor (7) in a direction of circulation of the refrigerant and capable of combining the refrigerant at the output of the first evaporator (9) and at the output of the second evaporator (11) to channel the refrigerant to the compressor (9).

10. System according to any one of the preceding claims, comprising a connection point (151) connected to the bypass branch (134), to the output of the undercooling exchanger (13) and to the second evaporator (11) .

11. System according to any one of Claims 9 and 10, in which the refrigerant circuit (3) comprises at least one non-return valve (153, 155) arranged between a connection point (139, 151) and the undercooling exchanger (13) or the first evaporator (9).

12. System according to Claim 1, in which the heat transfer fluid circuit (5) comprises a heating radiator (21) arranged downstream of the second heat exchanger (11) in a direction of flow of the airflow intended for the interior, and downstream of the condenser (15) in a direction of circulation of the heat transfer fluid.

13. Heating, ventilation and/or air-conditioning installation, **characterized in that** it comprises a thermal conditioning system (1) for an airflow according to any one of the preceding claims.

14. Method for controlling the conditioning system for an airflow according to any one of Claims 1 to 12, comprising the following steps:
- the refrigerant is condensed,
- the circulation of the condensed refrigerant is controlled in the bypass branch (34, 134),
- the refrigerant is directed to the first evaporator (9) and/or to the second evaporator (11), the refrigerant being divided at a first connection point (35, 135) of the refrigerant circuit so that a part of the refrigerant is directed to the first evaporator (9) and another part of the refrigerant is directed to the undercooling exchanger (13),
- the refrigerant at the output of the first evaporator (9) and/or of the second evaporator (11) is directed to a compressor (7).

15. Control method according to Claim 14, in which the circulation of the condensed refrigerant in the undercooling exchanger (13) is prevented, such that the refrigerant circulates in the bypass branch (34, 134) by bypassing the undercooling exchanger (13).

16. Control method according to Claim 15, in which the circulation of the condensed refrigerant in the undercooling exchanger (13) is allowed, such that the refrigerant circulates in parallel in the bypass branch (34, 134) and in the undercooling exchanger (13) .

17. Control method according to any one of Claims 14 to 16, in which the circulation of a heat transfer fluid is controlled in the condenser (15) for a heat exchange with the refrigerant, then the circulation of the heat transfer fluid is controlled in a heating radiator (21) arranged to condition the airflow intended for the interior.
